# EUROPÄISCHE PATENTSCHRIFT

(11) **EP 0 545 161 B1**
(45) Veröffentlichungstag und Bekanntmachung des Hinweises auf die Patenterteilung: **15.11.1995**
(21) Anmeldenummer: 92119754.7
(22) Anmeldetag: 20.11.1992
(51) Int. Cl.: D06P 3/54, C09B 67/00, C09B 57/00

(54) **Verfahren zur Herstellung thermomigrierechter Färbungen**
Process for the preparation of thermomigrating dyeings
Procédé de préparation de teintures thermomigrantes

(30) Priorität: 05.12.1991 DE 4140152
(43) Veröffentlichungstag der Anmeldung: 09.06.1993
(73) Patentinhaber: HOECHST MITSUBISHI KASEI CO., LTD., Minato-ku, Tokyo (JP)
(72) Erfinder: Bühler, Ulrich, Dr., W-8755 Alzenau (DE)
(74) Vertreter: Muley, Ralf, Dr.

(56) Entgegenhaltungen:
- EP-A- 0 222 255
- EP-A- 0 305 886
- EP-A- 0 371 223
- EP-A- 0 378 167
- EP-A- 0 441 166
- FR-A- 2 179 264

## Beschreibung

An textile Materialien, speziell an gefärbte Artikel aus Polyesterfasern und deren Mischungen mit natürlichen Fasern, beispielsweise Cellulosefasern, werden nach modernen Gebrauchsgepflogenheiten hohe Waschechtheitsanforderungen gestellt. Höherwertige Materialien werden im allgemeinen mit Kunstharzen und/oder Weichmachern hochveredelt, um sie pflegeleicht zu machen, wobei insbesondere Eigenschaften wie Bügel-, Krumpf- und Knitterfreiheit erwünscht sind (siehe z.B. Ullmanns Encyklopädie der technischen Chemie, 4. Aufl., Bd. 23, Seiten 77 ff.).

Es ist allgemein bekannt, daß die so nach dem heutigen Stand der Technik behandelten gefärbten Materialien nach einer nachträglichen Wärmebehandlung wie z.B. dem in der Praxis üblichen Thermofixieren bei 180^{o}C kaum mehr befriedigende Naßechtheiten, insbesondere keine befriedigende Waschechtheit bei 60^{o}C mit Haushaltswaschmitteln gemäß DIN 54017 aufweisen. Das als Begleitmaterial bei der Waschechtheitsprüfung üblicherweise verwendete Mehrfaserband zeigt stets ein starkes Anbluten, wovon besonders dessen Celluloseacetatfaser- und Polyamidfaseranteile betroffen sind. Diese unerwünschte Erscheinung wird auf die Neigung praktisch aller im Handel befindlichen Dispersionsfarbstoffe zum Thermomigrieren zurückgeführt. Der Farbstoff, der sich durch die Hitzebehandlung auf der Faseroberfläche ansammelt, wird bei der Wäsche abgelöst und färbt die im oben erwähnten Standardtest verwendeten Begleitgewebe mehr oder weniger stark an. Besonders nachteilig macht sich dieser Effekt beispielsweise bei Sportbekleidungsartikeln aus texturiertem Polyester- oder Polyester/Baumwollmaterialien bemerkbar. Diese Artikel sind bekanntlich häufig zur Verzierung mit weißen Gewebeabschnitten aus dem gleichen oder einem anderen (z.B. Polyamid-) Fasermaterial abgesetzt, die dann bei der Wäsche angeschmutzt werden.

Besonders deutlich tritt die Anschmutzung auf, wenn die gefärbten Materialien nach der Färbung eine Kunstharzausrüstung erhalten und die Wärmebehandlung beim Aufbringen dieser Kunstharzausrüstung erfolgt. Tiefe Färbungen neigen dabei zu stärkerem Anschmutzen als helle.

Die vorliegende Erfindung betrifft ein Verfahren zur Herstellung von hochthermomigrierechten Färbungen auf ganz oder teilweise aus Polyester bestehenden Fasermaterialien, bei dem die Fasermaterialien nach dem Färben einer thermischen Behandlung unterzogen werden, dadurch gekennzeichnet, daß mit einem oder mehreren Farbstoffen der allgemeinen Formel I 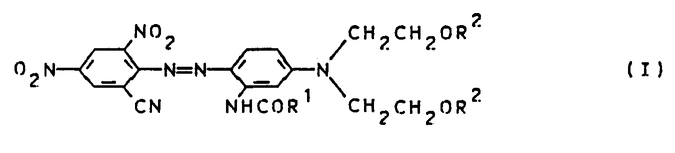
worin
R¹ und R² unabhängig voneinander Methyl und Ethyl bedeuten, gefärbt wird.

Bevorzugt ist die Summe der Kohlenstoffatome in den Resten R¹ und R² 3 bis 5.

Unter thermischer Behandlung versteht man bevorzugt ein Erhitzen auf 150 bis 200^{o}C und besonders bevorzugt auf 170 bis 190^{o}C jeweils für etwa 30 Sekunden.

Das erfindungsgemäße Verfahren ist besonders vorteilhaft, wenn die Fasermaterialien vor der thermischen Behandlung eine Kunstharzausrüstung erhalten.

Die erfindungsgemäß einzusetzenden Farbstoffe fallen teilweise unter die Offenbarung der Japanischen Patentschrift 74 37 931. In der DOS 35 45 459 wird ein Verfahren zum Färben und Bedrucken von Polyesterfasermaterialien in marineblauen Tönen beschrieben, bei dem nach thermischer Beanspruchung waschechte marineblaue Färbungen erhalten werden, wenn Farbstoffgemische eingesetzt werden, die als Blaukomponente mindestens einen Farbstoff der allgemeinen Formel II 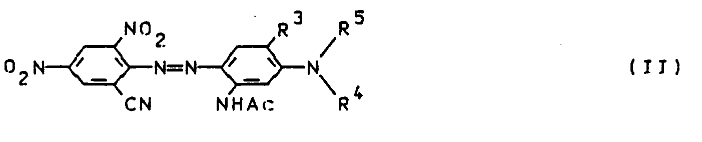
enthalten, in der
- Ac: einen Acylrest,
- R⁴: einen Alkyl- oder Alkoxyalkylrest,
- R⁵ R⁴: oder einen Aralkylrest und
- R³ R⁴,: Wasserstoff, einen Alkoxyrest oder - gemeinsam mit
- R⁵: - eine Alkylengruppe bedeuten.

Angesichts dieses Standes der Technik war es überraschend und für den Fachmann nicht voraussehbar, daß nach dem erfindungsgemäßen Verfahren Färbungen mit deutlich besseren Naßechtheiten wie Waschechtheit und Wasserechtheit und auch mit besseren Gebrauchsechtheiten wie Thermofixierechtheit und Lichtechtheit erhalten werden können.

Die Färbungen zeichnen sich darüberhinaus durch eine neutrale blaue Farbe von hoher Brillianz aus. Sie kommen im Farbton nahe an Färbungen mit anthrachinoiden Blaufarbstoffen wie C. I. Disperse Blue 73 oder 56 heran. Im Vergleich zu den Anthrachinonfarbstoffen bieten die erfindungsgemäß einzusetzenden Farbstoffe aber deutliche ökologische und ökonomische Vorteile bei deutlich höherem Naßechtheitsniveau. Kombiniert man die erfindungsgemäß einzusetzenden Blaufarbstoffe mit Gelbfarbstoffen, so kann man klare Grüntöne erzielen.
Die Farbstoffe der allgemeinen Formel I können auch in Mischungen untereinander eingesetzt werden. Solche Farbstoffmischungen bestehen bevorzugt aus drei, besonders bevorzugt aus zwei Farbstoffen der allgemeinen Formel I. Das Verhältnis der verschiedenen Farbstoffe der allgemeinen Formel I kann in relativ weiten Grenzen variieren. Im allgemeinen beträgt der Mindestgewichtsanteil einer Komponente 10 % und ihr maximaler Gewichtsanteil 90 %. Bei. Farbstoffmischungen, die nur aus zwei Farbstoffen der allgemeinen Formel I bestehen, ist ein Gewichtsverhältnis von 70 : 30 bis 30 : 70 bevorzugt, d. h. der Gewichtsanteil eines Farbstoffs beträgt 30 bis 70 %.
Die Farbstoffe der allgemeinen Formel I und ihre Mischungen untereinander können auch in Mischungen mit anderen Farbstoffen eingesetzt werden.

Es ist bevorzugt, die Farbstoffe der allgemeinen Formel I in Mischung mit gelben und/oder orangenen und/oder roten Farbstoffen einzusetzen.

Bevorzugte rote Farbstoffe sind Farbstoffe der allgemeinen Formel III 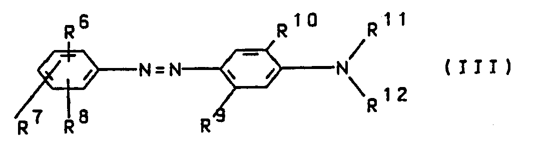
worin
- R⁶, R⁷, R⁸: unabhängig voneinander Wasserstoff, Methyl, Chlor, Brom, Nitro, SO₂CH₃, COOX oder Cyan, wobei mindestens ein Rest ungleich Wasserstoff sein muß;
- R⁹: Wasserstoff, X, NHCOX oder NHSO₂CH₃;
- R¹⁰: Wasserstoff oder Chlor;
- R¹¹ und R¹²: unabhängig voneinander Wasserstoff, X, (CH₂)ₙOCOX, (CH₂)ₙCOOX oder (CH₂)ₙCN, wobei nicht beide Reste gleichzeitig für Wasserstoff stehen können;
- X: lineares (C₁-C₄)-Alkyl, bevorzugt (C₁-C₂)-Alkyl und
- n: eine ganze Zahl von 1 bis 4, bevorzugt 2, bedeuten,
Farbstoffe der allgemeinen Formel IV 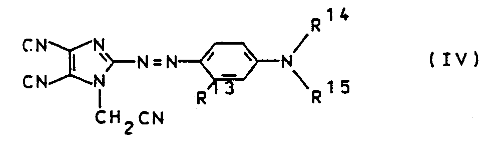
worin
- R¹³: Wasserstoff, Chlor, Brom oder Methyl und
- R¹⁴ und R¹⁵: unabhängig voneinander lineares (C₁-C₄)-Alkyl, (CH₂)₃COOCH₃ oder (CH₂)₃COOC₂H₅
bedeuten,
und Farbstoffe der allgemeinen Formel V 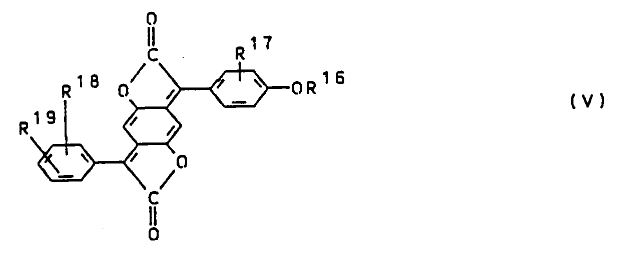
worin
- R¹⁶: (C₁-C₄)-Alkyl, das ggf. durch Hydroxy, Alkoxy mit 1 bis 4 C-Atomen, Acyloxy mit 2 bis 4 C-Atomen, Alkoxycarbonyl mit 2 bis 5 C-Atomen, Cyan oder Halogen substituiert ist,
- R¹⁷, R¹⁸ und R¹⁹: unabhängig voneinander (C₁-C₄)-Alkyl, (C₁-C₄)-Alkoxy oder Halogen bedeuten.

Bevorzugte orangene Farbstoffe sind solche der allgemeinen Formel VI 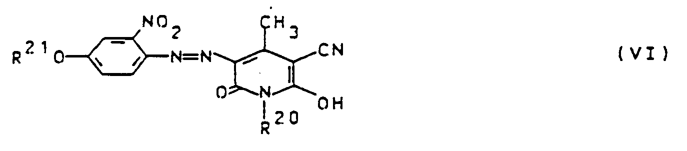
worin
- R²⁰: Wasserstoff, lineares (C₁-C₄)-Alkyl oder mit einem Sauerstoffatom unterbrochenes (C₃-C₆)-Alkyl und
- R²¹: (C₁-C₄)-Alkyl
bedeuten.

Bevorzugte gelbe Farbstoffe sind solche der allgemeinen Formel VII 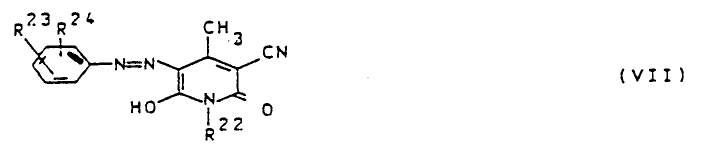
worin
- R²²: Wasserstoff, lineares (C₁-C₄)-Alkyl oder mit einem Sauerstoffatom unterbrochenes (C₃-C₆)-Alkyl, und
- R²³: Wasserstoff, (C₁-C₄)-Alkyl, Chlor, Nitro, ggf. substituiertes Alkoxycarbonyl mit 1 bis 4 C-Atomen in der Alkoxygruppe, Alkylcarbonyl mit 2 bis 4 C-Atomen, ggf. substituiertes Phenylcarbonyl, ggf. substituiertes Alkylaminosulfonyl mit 1 bis 4 C-Atomen in der Alkylgruppe, ggf. substituiertes Phenoxysulfonyl oder ggf. substituiertes Phenylsulfonyloxy und
- R²⁴: Wasserstoff, Chlor oder (C₁-C₄)-Alkyl
bedeuten.

In den genannten Farbstoffmischungen kann das Verhältnis der verschiedenen Farbstoffe in relativ weiten Grenzen variieren. Der Gewichtsanteil des Farbstoffes der allgemeinen Formel I bzw. der Mischung aus Farbstoffen der allgemeinen Formel I beträgt in Abhängigkeit von der Nuance, die erhalten werden soll, 5 bis 95 Gew%.

Die Herstellung der erfindungsgemäß einzusetzenden Farbstoffe der allgemeinen Formel I erfolgt vorzugsweise dadurch, daß man Azofarbstoffe der Formel VIII 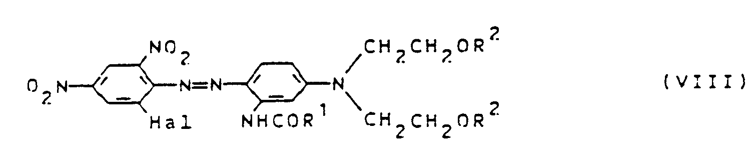
in welcher Hal ein Halogenatom wie Chlor oder insbesondere Brom bedeutet in an sich bekannter Weise, z. B. nach den Angaben der DE-OS 18 09 920, der DE-OS 18 09 921, der GB-PS 11 84 825, der DE-AS 15 44 563, der DE-OS 23 10 745, der DE-AS 24 56 495, der DE-AS 26 10 675, der DE-OS 27 24 116, der DE-OS 27 24 117, der DE-OS 28 34 137, der DE-OS 23 41 109, der US-PS 38 21 195, der DE-OS 27 15 034 oder der DE-OS 21 34 896 einer nukleophilen Austauschreaktion unterwirft, wobei als nukleophiles Agenz das Cyanidion CN^{⊖} eingesetzt wird. Bei dieser Reaktion wird in dem Farbstoff der Formel VIII Hal gegen CN ausgetauscht. Die Farbstoffe der allgemeinen Formeln III bis VII, Ia, Ib und Ic sind bekannt und können nach dem Fachmann bekannten Methoden hergestellt werden.

Die genannten Mischungen können hergestellt werden durch Mischen der separat hergestellten und gefinishten Einzelkomponenten. Bevorzugt werden sie hergestellt durch gemeinsames Finishen der separat hergestellten Einzelkomponenten. Mischungen von Farbstoffen der allgemeinen Formel I untereinander werden bevorzugt durch gemeinsamen Cyanaustausch entsprechender Vorprodukte der allgemeinen Formel VIII hergestellt.

Das erfindungsgemäße Verfahren eignet sich vorzüglich zum Färben und Bedrucken von ganz oder teilweise aus Polyester bestehenden Fasermaterialien. Vorzugsweise wird das erfindungsgemäße Verfahren zum Färben und Bedrucken von Materialien aus hochmolekularen Polyestern, insbesondere solchen auf Basis von Polyethylenglykolterephthalaten oder deren Mischungen mit natürlichen Faserstoffen, bevorzugt mit Cellulose eingesetzt.

Die zu färbenden Materialien können in Form von flächen- oder fadenförmigen Gebilden vorliegen und z.B. zu Garnen oder gewebten, gewirkten oder gestrickten Textilstoffen verarbeitet sein. Das Färben des genannten Fasergutes mit den genannten Farbstoffen oder Farbstoffmischungen erfolgt in an sich bekannter Weise, vorzugsweise aus wäßriger Suspension, gegebenenfalls in Gegenwart von Carriern, zwischen 80 bis ca. 110^{o}C nach dem Ausziehverfahren oder nach dem HT-Verfahren im Färbeautoklav bei 110 bis 140^{o}C, sowie nach dem sogenannten Thermofixierverfahren, wobei die Ware mit der Färbeflotte geklotzt und anschließend bei etwa 180 bis 230^{o}C fixiert wird. Das Bedrucken der genannten Materialien kann in an sich bekannter Weise so durchgeführt werden, daß die genannten Farbstoffe oder Farbstoffmischungen in eine Druckpaste einverleibt werden und die damit bedruckte Ware zur Fixierung des Farbstoffs, gegebenenfalls in Gegenwart eines Carriers, bei Temperaturen zwischen 80 bis 230^{o}C mit HT-Dampf, Druckdampf oder Trockenhitze behandelt wird. Man erhält auf diese Weise sehr farbstarke Färbungen und Drucke mit sehr guten Echtheitseigenschaften, insbesondere einer guten Licht-, Thermofixier-, Thermomigrier- und Waschechtheit und vor allem einer sehr guten M+S-Echtheit (C4A-Wäsche).

Das erfindungsgemäße Verfahren ist besonders vorteilhaft, wenn die Fasermaterialien nach dem Färben eine Kunstharzausrustung und daran anschließend die thermische Behandlung erhalten.

Die sich somit gegebenenfalls an die Färbung anschließende Ausrüstung geschieht nach den bekannten Verfahren, die der einschlägigen Fachliteratur zu entnehmen (siehe z. B. Ullmanns Encyklopädie der technischen Chemie, 4. Aufl., Bd. 23, Seiten 77 ff. und die dort zitierte Literatur) und dem Fachmann somit bekannt sind.

Bevorzugte Verfahren sind beispielsweise das Trockenvernetzungs-Verfahren, das Schock-Trocknung-Kondensations-Verfahren und das Postcure-Verfahren.

Für den Einsatz in diesen Verfahren für die Hochveredelung von Polyester/Cellulose-Mischgeweben kommen Chemikalien in Frage, die geeignet sind, die Cellulosemoleküle der Fasern zu vernetzen.

Bevorzugt sind N-Hydroxymethyl- oder N-Methoxymethylderivate von Harnstoff, wie z.B. Bis(hydroxymethyl)harnstoff und Bis(methoxymethyl)harnstoff, von Melamin, wie z.B. Hexamethoxymethylmelamin, von 2-Imidazolidinonen, wie z.H. Bis(hydroxymethyl)ethylenharnstoff und Bis(hydroxymethyl)dihydroxyethylenharnstoff oder von anderen Heterocyclen, wie z.B. Bis(hydroxymethyl)-propylenharnstoff, Bis(hydroxymethyl)-hexahydrotriazinone und Bis(methoxymethyl)uron.

Die Ausrüstung kann auch eine Behandlung mit Weichmachern umfassen. Als Weichmacher werden insbesondere Verbindungen verwendet, die einen hydrophilen und einen hydrophoben Molekülteil aufweisen, die jedoch ansonsten sehr unterschiedliche Konstitutionen aufweisen können. Anionische Weichmacher sind beispielsweise Fettsäuresalze, Salze von Schwefelsäureestern oder Sulfonsäuren und Kondensationsprodukte von Fettsäuren mit Verbindungen, die Sulfonatgruppen enthalten. Nichtionogene Weichmacher sind beispielsweise Oxethylierungsprodukte von Fettsäuren, Fettalkoholen, Fettsäureamiden und Fettaminen. Bevorzugt sind kationische Weichmacher, wie beispielsweise Salze oder quarternierte Verbindungen von tertiären Aminen, Aminoestern und Aminoamiden.

In den bei obigen Applikationen eingesetzten Färbeflotten und Druckpasten sollen die Farbstoffe oder Farbstoffmischungen in möglichst feiner Verteilung vorliegen.

Die Feinverteilung der Farbstoffe erfolgt in an sich bekannter Weise dadurch, daß man den in der Fabrikation anfallenden Farbstoff zusammen mit Dispergiermitteln in einem flüssigen Medium, vorzugsweise in Wasser, aufschlämmt und die Mischung der Einwirkung von Scherkräften aussetzt, wobei die ursprünglich vorhandenen FarbstoffTeilchen mechanisch so weit zerkleinert werden, daß eine optimale spezifische Oberfläche erreicht wird und die Sedimentation des Farbstoffs möglichst gering ist. Die Teilchengrößen der Farbstoffe liegt im allgemeinen zwischen 0,5 und 5 µm, vorzugsweise bei etwa 1 µm.

Die Erfindung wird durch die folgenden Beispiele näher erläutert. Prozentangaben sind Gewichtsprozente.

### Beispiel 1

a) In eine Suspension aus 100 ml Dimethylsulfoxid, 2,1 g Natriumcyanid und 7,1 g Kupfer-I-cyanid werden bei 70 bis 75^{o}C 53,9 g des Farbstoffs der Formel VIII 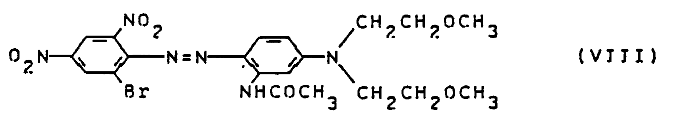 eingetragen und 30 min bei dieser Temperatur gerührt. Dann wird die Temperatur 30 min auf 110^{o}C angehoben und der Ansatz anschließend langsam kaltgerührt, abgesaugt, mit 45 ml Dimethylsulfoxid, 7,5%iger wäßriger Ammoniaklösung und Wasser gewaschen und unter vermindertem Druck getrocknet. Man erhält so 38 g des Farbstoffs der Formel Ia 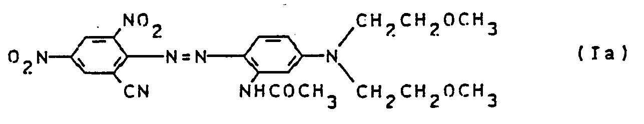 der bei 607 nm sein Absorptionsmaximum besitzt.
b) 1 g dieses Farbstoffs wird in feindispergierter Form in 2000 ml Wasser eingerührt. Die so erhaltene Dispersion wird mit 2,0 g Natriumacetat und 1,0 g eines handelsüblichen Dispergiermittels auf Basis eines Naphthalin-sulfonsäure-Formaldehyd-Kondensats versetzt und mit Essigsäure auf einen pH-Wert von 4 - 5 eingestellt. In die so erhaltene Färbeflotte bringt man 100 g eines Polyester/Zellwolle-Mischgewebes 70 : 30 ein und färbt 45 Minuten bei 130 ^{o}C. Anschließen wird gespült, mit einer 0,2%igen Natriumdithionitlösung während 15 Minuten bei 70 bis 80 ^{o}C reduktiv nachbehandelt, nochmals gespült und getrocknet. Die so hergestellte Färbung wird einer Hochveredelung unterzogen, indem sie mit einer wäßrigen Lösung imprägniert wird, die in einem Liter 40 g eines Reaktantharzes auf Basis Dimethyloldihydroxyethylenharnstoff, 20 g eines Melaminharzes auf Basis partiell veretherter Methylolmelamine, 20 g einer nichtionischen Polyethylenemulsion, 20 g eines anionischen Weichmachers auf Silikonbasis und 8 g eines Katalysators auf Basis eines Aminsalzes enthält, anschließend eine Minute bei 100 ^{o}C getrocknet und 30 Sekunden auf 180 ^{o}C erhitzt wird. Auf diese Weise erhält man eine hochveredelte farbstarke blaue Färbung mit sehr guten coloristischen Eigenschaften und einer perfekten Waschechtheit bei 60 ^{o}C mit ECE-Waschmitteln gemäß DIN 54017/C2.

Ein mitgewaschenes Mehrfaserband zeigt auf seinem Polyamidanteil eine Anschmutzung, die nach dem Graumaßstab mit 4 - 5 bewertet wird.

### Vergleichsbeispiel

Wird der Farbstoff des Beispiels 1 ersetzt durch den Farbstoff der Formel 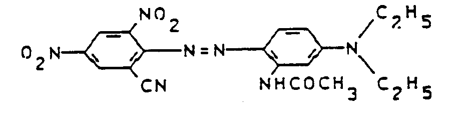
(Beispiel A der DOS 35 45 459) und wird weiter so verfahren wie in Beispiel 1, so erhält man ebenfalls eine farbstarke blaue Färbung, die jedoch nach der Kunstharzausrüstung bei der Wäsche das mitgewaschene Mehrfaserband deutlich stärker anschmutzt. Die Anschmutzung des Polyamidanteils muß nach Graumaßstab mit 3 bewertet werden.

### Beispiel 2

Unter Verwendung des Farbstoffs der Formel Ib 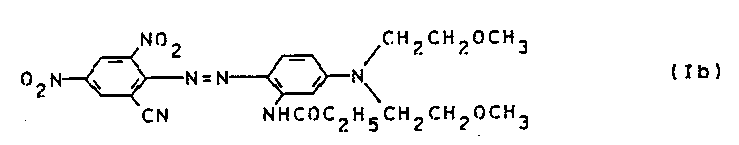
erhält man auf gleiche Weise wie in Beispiel 1 beschrieben farbstarke blaue Färbungen mit sehr guten Echtheitseigenschaften.

### Beispiel 3

20,0 g des Farbstoffs der Formel Ic 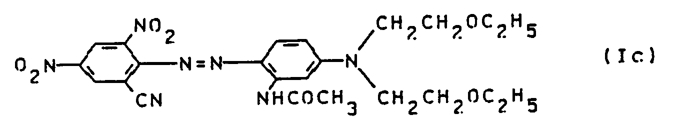
werden in feiner Verteilung einer Druckpaste, die 45,0 g Johannisbrotmehl, 6,0 g Natrium-m-nitrobenzolsulfonat und 3,0 g Zitronensäure auf 1000 g enthält, einverleibt. Wird Polyester/Zellwolle-Mischgewebe mit dieser Druckpaste bedruckt, das bedruckte Gewebe nach dem Trocknen 15 Minuten bei 1,5 atü Dampfdruck gedämpft, gespült, geseift, erneut gespült und einer Veredelung wie in Beispiel 1 beschrieben unterzogen, so erhält man einen farbstarken blauen Druck von sehr guten coloristischen Eigenschaften.

### Beispiel 4

Eine Mischung aus 0,16 g des Farbstoffs der Formel Id 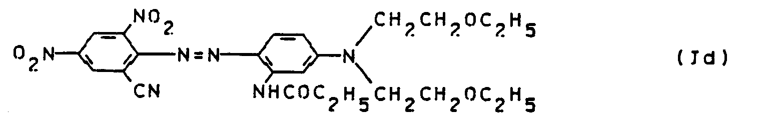
und 0,22 g des gelben Farbstoffs der Formel VII, in der R²² Ethyl, R²³ 2-Nitro und R²⁴ 4-Chlor bedeuten, wird in gefinishter Form, wie in Beispiel 1 beschrieben, zur Herstellung einer hochausgerüsteten Färbung eingesetzt. Man erhält eine grüne Färbung mit guter Thermomigrierechtheit.

## Patentansprüche

1. Verfahren zur Herstellung von hochthermomigrierechten Färbungen auf ganz oder teilweise aus Polyester bestehenden Fasermaterialien, bei dem die Fasermaterialien nach dem Färben einer thermischen Behandlung unterzogen werden, dadurch gekennzeichnet, daß mit einem oder mehreren Farbstoffen der allgemeinen Formel I 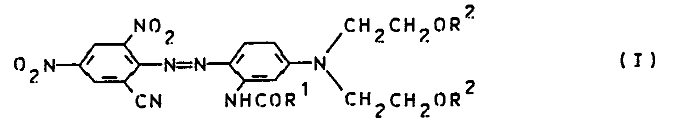 worin
R¹ und R² unabhängig voneinander Methyl und Ethyl bedeuten, gefärbt wird.

2. Verfahren gemäß Anspruch 1, dadurch gekennzeichnet, daß die Summe der Kohlenstoffatome in den Resten R¹ und R² 3 bis 5 beträgt.

3. Verfahren gemäß Anspruch 1 und/oder 2, dadurch gekennzeichnet, daß die Farbstoffe der allgemeinen Formel I in Mischung mit gelben und/oder orangenen und/oder roten Farbstoffen eingesetzt. werden.

4. Verfahren gemäß Anspruch 3, dadurch gekennzeichnet, daß als rote Farbstoffe Farbstoffe der allgemeinen Formel III 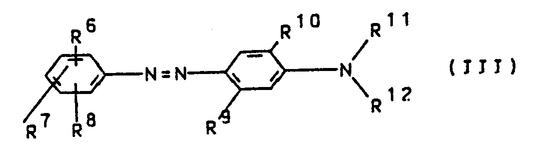 worin
R⁶, R⁷, R⁸ unabhängig voneinander Wasserstoff, Methyl, Chlor, Brom, Nitro, SO₂CH₃, COOX oder Cyan, wobei mindestens ein Rest ungleich Wasserstoff sein muß;
R⁹ Wasserstoff, X, NHCOX oder NHSO₂CH₃;
R¹⁰ Wasserstoff oder Chlor;
R¹¹ und R¹² unabhängig voneinander Wasserstoff, X, (CH₂)ₙOCOX, (CH₂)ₙCOOX oder (CH₂)ₙCN, wobei nicht beide Reste gleichzeitig für Wasserstoff stehen können;
X lineares (C₁-C₄)-Alkyl, bevorzugt (C₁-C₂)-Alkyl und
n eine ganze Zahl von 1 bis 4, bevorzugt 2, bedeuten,
Farbstoffe der allgemeinen Formel IV 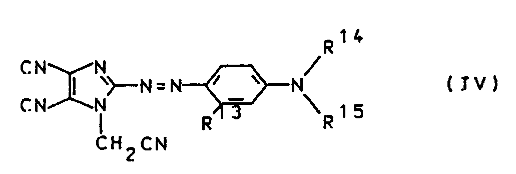 worin
R¹³ Wasserstoff, Chlor, Brom oder Methyl und
R¹⁴ und R¹⁵ unabhängig voneinander lineares (C₁-C₄)-Alkyl, (CH₂)₃COOCH₃ oder (CH₂)₃COOC₂H₅
bedeuten,
und Farbstoffe der allgemeinen Formel V 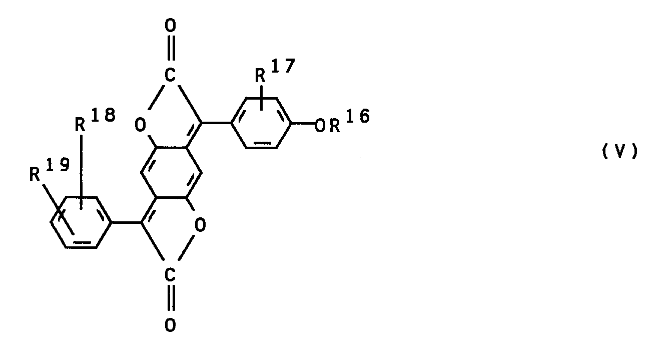 worin
R¹⁶ (C₁-C₄)-Alkyl, (C₁-C₄)-Alkyl das durch Hydroxy, Alkoxy mit 1 bis 4 C-Atomen, Acyloxy mit 2 bis 4 C-Atomen, Alkoxycarbonyl mit 2 bis 5 C-Atomen, Cyan oder Halogen substituiert ist,
R¹⁷, R¹⁸ und R¹⁹ unabhängig voneinander (C₁-C₄)-Alkyl, (C₁-C₄)-Alkoxy oder Halogen bedeuten, eingesetzt werden.

5. Verfahren gemäß Anspruch 3, dadurch gekennzeichnet, daß als orangene Farbstoffe Farbstoffe der allgemeinen Formel VI 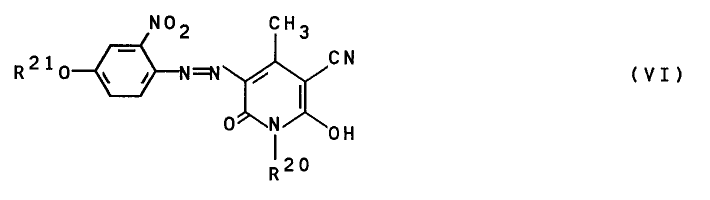 worin
R²⁰ Wasserstoff, lineares (C₁-C₄)-Alkyl oder mit einem Sauerstoffatom unterbrochenes (C₃-C₆)-Alkyl und
R²¹ (C₁-C₄)-Alkyl
bedeuten, eingesetzt werden.

6. Verfahren gemäß Anspruch 3, dadurch gekennzeichnet, daß als gelbe Farbstoffe Farbstoffe der allgemeinen Formel VII 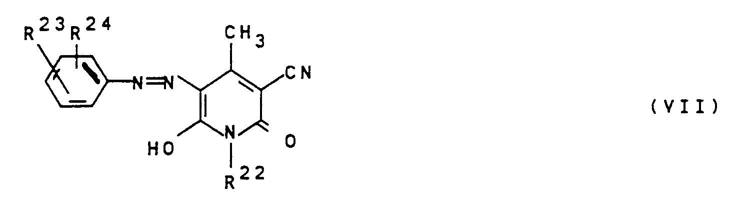 worin
R²² Wasserstoff, lineares (C₁-C₄)-Alkyl oder mit einem Sauerstoffatom unterbrochenes (C₃-C₆)-Alkyl, und
R²³ Wasserstoff, (C₁-C₄)-Alkyl, Chlor, Nitro, Alkoxycarbonyl mit 1 bis 4 C-Atomen in der Alkoxygruppe, Alkylcarbonyl mit 2 bis 4 C-Atomen, Phenylcarbonyl, Alkylaminosulfonyl mit 1 bis 4 C-Atomen in der Alkylgruppe, Phenoxysulfonyl oder Phenylsulfonyloxy und
R²⁴ Wasserstoff, Chlor oder (C₁-C₄)-Alkyl
bedeuten, eingesetzt werden.

7. Verfahren gemäß einem oder mehreren der Ansprüche 1 bis 6, dadurch gekennzeichnet, daß die Fasermaterialien nach dem Färben eine Kunstharzausrüstung und daran anschließend die thermische Behandlung erhalten.

## Claims

1. Process for the preparation of highly thermomigration-resistant dyeings on fibre materials composed entirely or in part of polyester, in which the fibre materials, after dyeing, are subjected to a heat treatment, characterised in that dyeing is carried out with one or more dyes of the general formula I 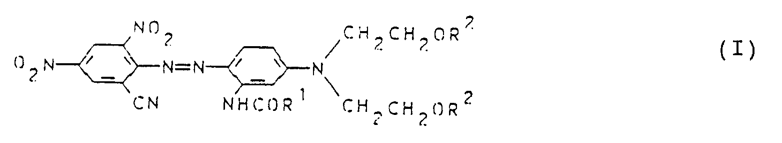 in which
R¹ and R², independently of one another, are methyl and ethyl.

2. Process according to Claim 1, characterised in that the sum total of carbon atoms in radicals R¹ and R² is 3 to 5.

3. Process according to Claim 1 and/or 2, characterised in that the dyes of the general formula I are used in a mixture with yellow and/or orange and/or red dyes.

4. Process according to Claim 3, characterised in that the red dyes used are dyes of the general formula III 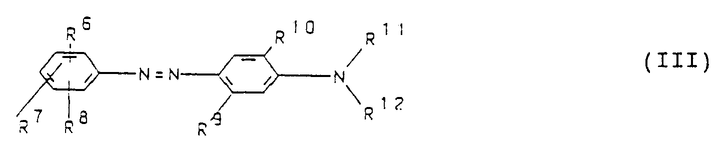 in which
R⁶, R⁷, R⁸, independently of one another, are hydrogen, methyl, chlorine, bromine, nitro, SO₂CH₃, COOX or cyano, in which at least one radical must not be equal to hydrogen;
R⁹ is hydrogen, X, NHCOX or NHSO₂CH₃;
R¹⁰ is hydrogen or chlorine;
R¹¹ and R¹², independently of one another, are hydrogen, X, (CH₂)ₙOCOX, (CH₂)ₙCOOX or (CH₂)ₙCN, in which both radicals cannot simultaneously represent hydrogen;
X is linear (C₁-C₄)-alkyl, preferably (C₁-C₂)-alkyl and
n is an integer from 1 to 4, preferably 2,
dyes of the general formula IV 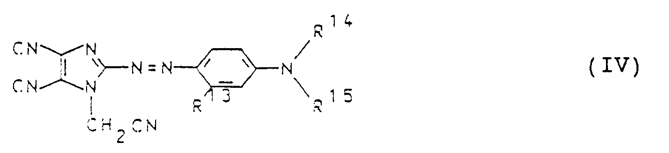 in which
R¹³ is hydrogen, chlorine, bromine or methyl and
R¹⁴ and R¹⁵, independently of one another, are linear (C₁-C₄)-alkyl, (CH₂)₃COOCH₃ or (CH₂)₃COOC₂H₅,
and dyes of the general formula V 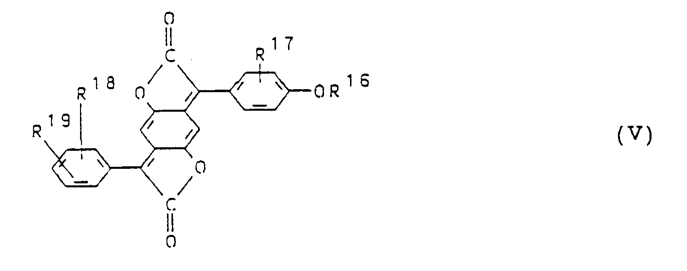 in which
R¹⁶ is (C₁-C₄)-alkyl which is unsubstituted or substituted by hydroxyl, alkoxy having 1 to 4 C atoms, acyloxy having 2 to 4 C atoms, alkoxycarbonyl having 2 to 5 C atoms, cyano or halogen,
R¹⁷, R¹⁸ and R¹⁹, independently of one another, are (C₁-C₄)-alkyl, (C₁-C₄)-alkoxy or halogen.

5. Process according to Claim 3, characterised in that the orange dyes used are dyes of the general formula VI 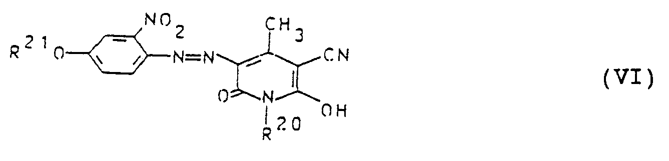 in which
R²⁰ is hydrogen, linear (C₁-C₄)-alkyl or (C₃-C₆)-alkyl which is interrupted by one oxygen atom and
R²¹ is (C₁-C₄)-alkyl.

6. Process according to Claim 3, characterised in that the yellow dyes used are dyes of the general formula VII 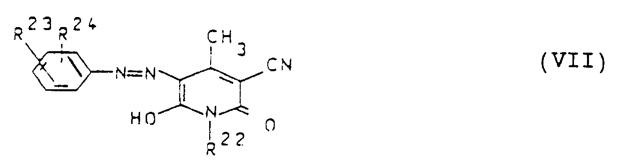 in which
R²² is hydrogen, linear (C₁-C₄)-alkyl or (C₃-C₆)-alkyl which is interrupted by one oxygen atom, and
R²³ is hydrogen, (C₁-C₄)-alkyl, chlorine, nitro, alkoxycarbonyl having 1 to 4 C atoms in the alkoxy group, alkylcarbonyl having 2 to 4 C atoms, phenylcarbonyl, alkylaminosulphonyl having 1 to 4 C atoms in the alkyl group, phenoxysulphonyl or phenylsulphonyloxy and
R²⁴ is hydrogen, chlorine or (C₁-C₄)-alkyl.

7. Process according to one or more of Claims 1 to 6, characterised in that the fibre materials, after dyeing, are given a synthetic resin finish, followed by the heat treatment.

## Revendications

1. Procédé de préparation de teintures très résistantes à la thermomigration sur des matières textiles constituées entièrement ou partiellement de polyester, dans lequel on soumet les matières textiles à un traitement thermique après la teinture, caractérisé en ce que l'on teint avec un ou plusieurs colorants de formule générale I 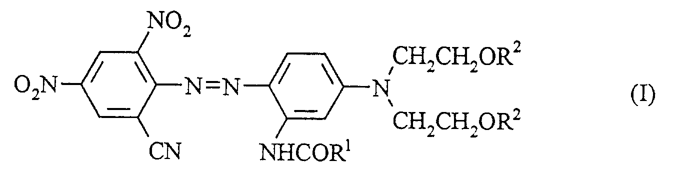 dans laquelle
R¹ et R² représentent indépendamment l'un de l'autre un méthyle ou un éthyle.

2. Procédé selon la revendication 1, caractérisé en ce que la somme des atomes de carbone dans les restes R¹ et R² est de 3 à 5.

3. Procédé selon la revendication 1 et/ou 2, caractérisé en ce que les colorants de formule générale I sont utilisés en mélange avec des colorants jaunes et/ou orange et/ou rouges.

4. Procédé selon la revendication 3, caractérisé en ce que l'on utilise comme colorants rouges des colorants de formule générale III 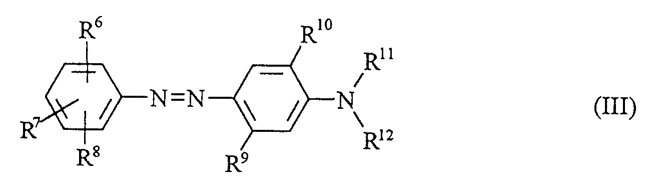 dans laquelle
R⁶, R⁷, R⁸ représentent indépendamment les uns des autres un hydrogène ou un reste méthyle, chloro, bromo, nitro, SO₂CH₃, COOX ou cyano, l'un au moins devant être un reste différent de l'hydrogène,
R⁹ représente un hydrogène, X, NHCOX ou NHSO₂CH₃;
R¹⁰ représente un atome d'hydrogène ou de chlore;
R¹¹ et R¹² représentent indépendamment l'un de l'autre un hydrogène, X, (CH₂)ₙOCOX, (CH₂)ₙCOOX ou (CH₂)ₙCN, les deux restes ne pouvant pas être un hydrogène en même temps;
X représente un alkyle linéaire en C₁-C₄, de préférence un alkyle en C₁-C₂ et
n est un nombre entier de 1 à 4, de préférence 2;
des colorants de formule générale IV 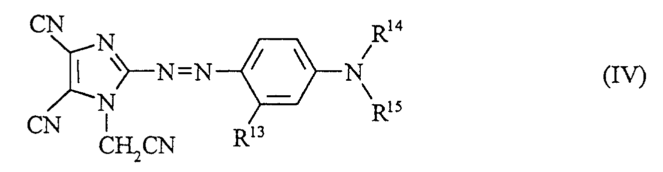 dans laquelle
R¹³ représente un hydrogène, un chlore, un brome ou un méthyle, et
R¹⁴ et R¹⁵ représentent indépendamment l'un de l'autre un alkyle linéaire en C₁-C₄, (CH₂)₃COOCH₃ ou (CH₂)₃COOC₂H₅,
et des colorants de formule générale V 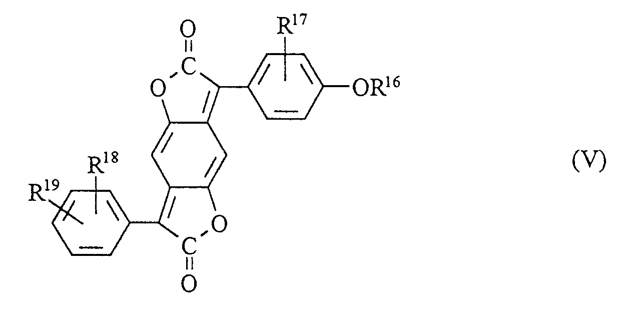 dans laquelle
R¹⁶ représente un alkyle en C₁-C₄, un alkyle en C₁-C₄ substitué par hydroxy, alcoxy de 1 à 4 atomes de carbone, acyloxy de 2 à 4 atomes de carbone, alcoxycarbonyle de 2 à 5 atomes de carbone, cyano ou halogène,
R¹⁷, R¹⁸ et R¹⁹ représentent indépendamment les uns des autres un alkyle en C₁-C₄, un alcoxy en C₁-C₄ ou un halogène.

5. Procédé selon la revendication 3, caractérisé en ce que l'on utilise comme colorants orange des colorants de formule générale VI 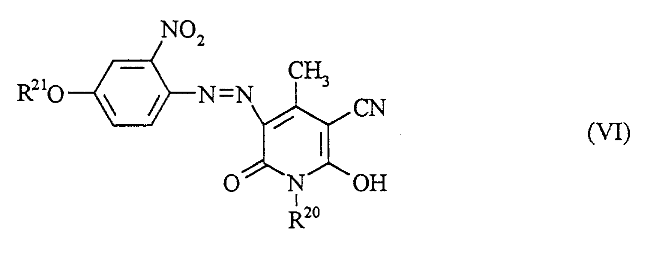 dans laquelle
R²⁰ représente un hydrogène, un alkyle linéaire en C₁-C₄ ou un alkyle en C₃-C₆ interrompu par un atome d'oxygène, et
R²¹ représente un alkyle en C₁-C₄.

6. Procédé selon la revendication 3, caractérisé en ce que l'on utilise comme colorants jaunes des colorants de formule générale VII 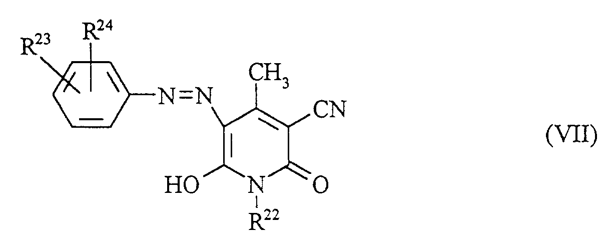 dans laquelle
R²² représente un hydrogène, un alkyle linéaire en C₁-C₄ ou un alkyle en C₃-C₆ interrompu par un atome d'oxygène, et
R²³ représente un hydrogène ou un reste alkyle en C₁-C₄, chloro, nitro, alcoxycarbonyle ayant 1 à 4 atomes de carbone dans le groupe alcoxy, alkylcarbonyle de 2 à 4 atomes de carbone, phénylcarbonyle, alkylaminosulfonyle avec 1 à 4 atomes de carbone dans le groupe alkyle, phénoxysulfonyle ou phénylsulfonyloxy, et
R²⁴ représente un hydrogène, un chlore ou un alkyle en C₁-C₄.

7. Procédé selon l'une ou plusieurs des revendications 1 à 6, caractérisé en ce que, après la teinture, on donne aux matières textiles un apprêt aux résines synthétiques, et en ce qu'on les soumet ensuite au traitement thermique.
